# EUROPÄISCHE PATENTSCHRIFT

(11) **EP 1 592 500 B1**
(45) Veröffentlichungstag und Bekanntmachung des Hinweises auf die Patenterteilung: **22.11.2006**
(21) Anmeldenummer: 04710024.3
(22) Anmeldetag: 11.02.2004
(51) Int. Cl.: B01J 2/14

(54) **VORRICHTUNG ZUM BEHANDELN EINES PARTIKELFÖRMIGEN GUTS SOWIE VERFAHREN ZUM BETREIBEN DER VORRICHTUNG**
DEVICE FOR TREATING A PARTICULATE PRODUCT AND DEVICE FOR ACTUATING SAID DEVICE
DISPOSITIF POUR TRAITER UN PRODUIT PARTICULAIRE ET PROCEDE PERMETTANT D'ACTIONNER LEDIT DISPOSITIF

(30) Priorität: 12.02.2003 DE 10306684
(43) Veröffentlichungstag der Anmeldung: 09.11.2005
(73) Patentinhaber: DIOSNA Dierks & Söhne GmbH, 49086 Osnabrück (DE)
(72) Erfinder: HÜTTLIN, Herbert, 79539 Lörrach (DE); HÜTTLIN, Wolfgang, 79585 Steinen (DE); KOCH, Kai, 79585 Steinen (DE); TOSCHKA, Christian, 79585 Steinen (DE)
(74) Vertreter: Heuckeroth, Volker
(86) Internationale Anmeldenummer: PCT/EP2004/001256
(87) Internationale Veröffentlichungsnummer: WO 2004/071647

(56) Entgegenhaltungen:
- DE-A- 10 104 184
- DE-B- 1 155 761
- US-A- 1 605 025
- US-A- 3 010 145

## Beschreibung

Die Erfindung betrifft eine Vorrichtung zum Behandeln eines partikelförmigen Guts, mit einem Behälter, der einen Boden, eine hochstehende, sich von unten nach oben erweiternde Wand und in einem oberen Bereich ein Umlenkelement aufweist, um das entlang der Wand nach oben steigende Gut in seiner Bewegungsrichtung so umzulenken, dass es wieder zu dem Boden zurückkehren kann, wobei zumindest die Wand um eine vertikale Drehachse in Rotation antreibbar ist.

Die Erfindung betrifft ferner ein Verfahren zum Betreiben einer solchen Vorrichtung.

Eine Vorrichtung sowie ein Verfahren der eingangs genannten Arten sind aus der WO 00/10699 bekannt.

Dort ist eine Vorrichtung zum Behandeln eines partikelförmigen Guts mit einem Überzugsmedium, insbesondere zum Beschichten von Arznei-, Lebensmittel-, technischen oder chemischen Formlingen beschrieben.

Eine solche Vorrichtung wird beispielsweise in der pharmazeutischen, chemischen, Süßwaren- oder Lebensmittelindustrie verwendet. In der pharmazeutischen Industrie werden durch Dragieren Arzneiformen hergestellt, die mit einem Zuckersirup überzogen sind. Durch Filmbeschichten, oder auch Filmcoating genannt, werden Film- oder Lacktabletten hergestellt, worunter man mit einem Polymer überzogene Arzneiformen versteht.

Bei der bekannten Vorrichtung wird das partikelförmige Gut in den Behälter eingefüllt und durch Rotation des Behälters in einer fortlaufenden Umwälzbewegung entlang des Bodens und der hochstehenden rotierenden Behälterwand von einem unteren Bereich in einen oberen Bereich des Behälters bewegt, im oberen Bereich des Behälters durch ein Umlenkelement umgelenkt und entlang einer inneren, von der ersten Behälterwand radial beabstandeten Rückführfläche wieder zu dem ebenfalls rotierenden Boden des Behälters zurückbewegt.

Das Umlenkelement, das mit einer Mehrzahl von Leitschaufeln versehen ist, ist mit der Behälterwand fest verbunden und dreht sich entsprechend mit gleicher Drehgeschwindigkeit mit der Wand des Behälters mit.

Eine weitere Vorrichtung der gattungsgemäßen Art ist aus der DE 101 04 184 A1 bekannt. Von der zuvor beschriebenen bekannten Vorrichtung unterscheidet sich diese dadurch, dass die Rückführfläche zum Zurückführen des partikelförmigen Guts zum Boden des Behälters außerhalb der in Rotation versetzbaren hochstehenden Wand des Behälters angeordnet ist. Auch der Behälter dieser bekannten Vorrichtung weist in seinem oberen Bereich ein Umlenkelement auf, um das durch Rotation der hochstehenden Wand entlang der Wand nach oben steigende Gut in seiner Bewegungsrichtung so umzulenken, dass es entlang der radial außerhalb angeordneten Rückführfläche zum Boden des Behälters zurück gelangen kann. Bei dieser bekannten Vorrichtung ist das Umlenkelement statisch, d.h. dreht sich während der Umwälzbewegung des partikelförmigen Guts nicht mit.

Bei beiden zuvor genannten bekannten Vorrichtungen ergeben sich im Bereich des Umlenkelements folgende Probleme.

Wenn das Umlenkelement mit der hochstehenden Wand des Behälters, an der das partikelförmige Gut auf Grund der Rotation der Wand aufsteigt, mit gleicher Drehgeschwindigkeit mitdreht, ist die Bewegungsumkehr der Gutpartikel auf Grund der auf die Gutpartikel durch die Drehung des Umlenkelements wirkende hohe Zentrifugalkraft unzureichend, so dass sich die Gutpartikel am Umlenkelement stauen können. Dabei ist zu berücksichtigen, dass die Gutpartikel im Bereich des Umlenkelements eine Bewegungsumkehr von etwa 180° ausführen sollen, andererseits jedoch im oberen Bereich der Wand des Behälters eine hohe kinetische Energie und einen hohen Impuls in zentrifugaler Richtung mit zusätzlicher vertikal nach oben gerichteter Komponente besitzen.

Wenn andererseits wie bei der anderen zuvor genannten bekannten Vorrichtung das Umlenkelement statisch ist, besteht zwar nicht das Problem eines Partikelstaus im Bereich des Umlenkelements, jedoch werden die Gutpartikel beim Übergang von der rotierenden Wand des Behälters zum Umlenkelement wegen der sehr großen Geschwindigkeitsdifferenz dann sehr stark einer Abrasion ausgesetzt, die die zu behandelnden Gutpartikel beschädigen kann. Folglich ist dann das Ergebnis der Behandlung des partikelförmigen Guts, beispielsweise der Behandlung mit einem Überzugsmedium, unter Umständen nicht zufriedenstellend.

Die zuvor beschriebenen Probleme einerseits eines Partikelstaus im Bereich des Umlenkelements bzw. einer Abrasion und Beschädigung der Gutpartikel im Bereich des Umlenkelements treten vorrangig bei solchen Vorrichtungen auf, die zum Behandeln großer Chargen von partikelförmigem Gut ausgelegt sind. Solche Vorrichtungen weisen entsprechend einen groß dimensionierten Behälter auf, deren hochstehende rotierende Wand im oberen Bereich entsprechend einen großen Durchmesser aufweist. Mit wachsendem Durchmesser des oberen Bereichs der rotierenden Wand nimmt die kinetische Energie bzw. Bahngeschwindigkeit der Gutpartikel jedoch zu, wodurch in dem einen Fall die Abrasionskräfte und in dem anderen Fall die Stauwirkung im Bereich des Umlenkelements besonders zum Tragen kommt.

Der Erfindung liegt daher die Aufgabe zugrunde, eine Vorrichtung und ein Verfahren der eingangs genannten Art dahingehend weiterzubilden, dass einerseits eine gleichmäßige Umwälzbewegung des partikelförmigen Guts ohne verdichtung des Guts am Umlenkelement und andererseits ein verbessertes Behandlungsergebnis in Folge einer Verringerung von Abrasionskräften im Bereich des Umlenkelements erreicht wird.

Erfindungsgemäß wird diese Aufgabe hinsichtlich der eingangs genannten Vorrichtung dadurch gelöst, dass im oberen Bereich des Behälters zumindest ein Behälterelement vorhanden ist, das in gleicher Richtung wie die hochstehende Wand, jedoch mit geringerer Drehgeschwindigkeit um die vertikale Drehachse in Rotation antreibbar ist.

Hinsichtlich des eingangs genannten Verfahrens zum Betreiben dieser Vorrichtung wird die Aufgabe dadurch gelöst, dass das zumindest eine Behälterelement mit einer Drehgeschwindigkeit in Rotation versetzt wird, die kleiner ist als die Drehgeschwindigkeit der Wand.

Das erfindungsgemäß vorgesehene Behälterelement ermöglicht es, dass die Relativgeschwindigkeit des partikelförmigen Guts zu dem Umlenkelement derart einstellbar ist, dass sie einerseits geringer ist als bei der bekannten Vorrichtung mit statischem Umlenkelement, andererseits höher als bei der bekannten Vorrichtung, bei der das Umlenkelement mit gleicher Geschwindigkeit mit der rotierenden Wand des Behälters mitdreht. Das erfindungsgemäß vorgesehene Behälterelement nimmt einen Teil der kinetischen Energie bzw. des Impulses der Gutpartikel auf, bremst dies mit anderen Worten, so dass das partikelförmige Gut am Umlenkelement sicher und ohne Abrasionseffekte umgelenkt wird, so dass es wieder zu dem Boden zurückkehren kann. Das Behälterelement kann dabei auf verschiedene Weisen realisiert werden, wie hiernach bezüglich bevorzugter Ausführungsformen beschrieben wird.

Die erfindungsgemäße Vorrichtung kann ohne Rückführfläche, mit innerhalb der Wand angeordneter Rückführfläche oder auch außerhalb der Wand angeordneter Rückführfläche versehen sein, wie dies im Stand der Technik beschrieben ist.

In einer bevorzugten Ausgestaltung ist das zumindest eine Behälterelement das Umlenkelement selbst.

Bei dieser Ausgestaltung der erfindungsgemäßen Vorrichtung dreht sich demnach das Umlenkelement ebenfalls um die vertikale Drehachse, jedoch mit einer Drehgeschwindigkeit, die geringer ist als die Drehgeschwindigkeit der rotierenden Wand des Behälters. Durch diese Maßnahme besitzt das partikelförmige Gut am Umlenkelement eine Relativgeschwindigkeit zu diesem, die einerseits klein genug ist, um Abrasionen des partikelförmigen Guts zu reduzieren oder zu vermeiden, andererseits groß genug, um einen Stau des partikelförmigen Guts am Umlenkelement zu vermeiden, d.h. um sicher zu gewährleisten, dass das partikelförmige Gut an dem Umlenkelement in seiner Bewegungsrichtung schonend und stetig umgelenkt wird, damit es wieder zu dem Boden zurückkehren kann.

In einer weiteren bevorzugten Ausgestaltung ist das zumindest eine Behälterelement zumindest ein Wandsegment, das dem Umlenkelement benachbart ist.

Bei dieser Ausgestaltung befindet sich demnach zwischen dem Umlenkelement und der Wand des Behälters zumindest ein Wandsegment, das sich in gleiche Richtung wie die Wand des Behälters dreht, gegenüber dieser jedoch mit einer geringeren Drehgeschwindigkeit, so dass dem partikelförmigen Gut auf diesem Wandsegment bereits ein Teil der kinetischen Energie entzogen wird, bevor es auf das Umlenkelement gelangt, wodurch ebenfalls die Relativgeschwindigkeit gegenüber dem Umlenkelement so vermindert werden kann, dass Abrasionen reduziert oder vermieden werden. Es können auch zwei oder mehrere solcher Wandsegmente vorhanden sein, beispielsweise bei sehr großen Behältern.

In einer weiteren bevorzugten Ausgestaltung sind sowohl das Umlenkelement als auch das zumindest eine Wandsegment um die vertikale Drehachse in Rotation antreibbar, wobei die Drehgeschwindigkeit des Wandsegments auf einen Wert einstellbar ist, der kleiner ist als die Drehgeschwindigkeit der Wand, und wobei die Drehgeschwindigkeit des Umlenkelements auf einen Wert einstellbar ist, der kleiner ist als die Drehgeschwindigkeit des Wandsegments.

Bei dem Verfahren zum Betreiben der Vorrichtung ist entsprechend vorgesehen, dass die Drehgeschwindigkeit des Wandsegments auf einen Wert eingestellt wird, der kleiner ist als die Drehgeschwindigkeit der Wand, und dass die Drehgeschwindigkeit des Umlenkelements auf einen Wert eingestellt wird, der kleiner ist als die Drehgeschwindigkeit des Wandsegments.

Diese Ausgestaltung hat den besonderen Vorteil, dass eine mehrstufige Absenkung der Bahngeschwindigkeit des partikelförmigen Guts im oberen Bereich des Behälters erzielt wird, die zu einer kinematisch besonders günstigen und dabei dennoch schonenden Umlenkung des partikelförmigen Guts am Umlenkelement führt.

In einer weiteren bevorzugten Ausgestaltung der Vorrichtung ist die Drehgeschwindigkeit des zumindest einen Behälterelements auf einen Wert einstellbar, der im Bereich von etwa 10 % bis 80 %, vorzugsweise von etwa 20 % bis 60 % der Drehgeschwindigkeit der Wand liegt.

Bei dem Verfahren ist entsprechend vorzugsweise vorgesehen, dass das zumindest eine Behälterelement mit einer Drehgeschwindigkeit in Rotation versetzt wird, die im Bereich von etwa 10 % bis 80 %, vorzugsweise von etwa 20 % bis 60 % der Drehgeschwindigkeit der Wand liegt.

Die genannten Bereiche der Relativgeschwindigkeiten zwischen dem zumindest einen Behälterelement und der rotierenden Wand des Behälters, die sich auf das Umlenkelement selbst und/oder das zumindest eine Wandsegment und/oder sowohl das Umlenkelement als auch das Wandsegment beziehen können, sind hinsichtlich der gewünschten Wirkung einer schonenden und kinematisch günstigen Umlenkung des Guts am Umlenkelement vorteilhaft.

In weiteren bevorzugten Ausgestaltungen der Vorrichtung ist die Drehgeschwindigkeit des zumindest einen Behälterelements auf einen solchen Wert einstellbar, dass die Bahngeschwindigkeitsdifferenz zwischen benachbarten Bereichen der Wand und des Behälterelements im Bereich von etwa 0,5 bis 3 m/s oder im Bereich von etwa 0,9 bis 2 m/s liegt.

Hinsichtlich des Verfahrens ist es entsprechend bevorzugt, wenn die Drehgeschwindigkeit des zumindest einen Behälterelements auf einen solchen Wert eingestellt wird, dass die Bahngeschwindigkeitsdifferenz zwischen benachbarten Bereichen der Wand und des Behälterelements im Bereich von etwa 0,5 bis 3 m/s, oder im Bereich von etwa 0,9 bis 2 m/s liegt.

In diesen Bereichen der Bahngeschwindigkeitsdifferenz der Gutpartikel beim Übergang von der rotierenden Wand auf das Behälterelement, beispielsweise das rotierende Umlenkelement und/oder das zumindest eine Wandsegment wurde beobachtet, dass die Abrasionswirkung und die Stauwirkung am Umlenkelement reduziert bis ausgeschaltet wurden.

In einer weiteren bevorzugten Ausgestaltung der Vorrichtung ist innerhalb oder außerhalb der Wand des Behälters eine sich von oben nach unten verjüngende Rückführfläche zum Zurückführen des Guts zum Boden des Behälters angeordnet.

Diese Maßnahme hat wie bei den bekannten Vorrichtungen den Vorteil, dass die Rückführung des partikelförmigen Guts vom oberen Bereich des Behälters in den unteren Bereich des Behälters zum einen beabstandet von dem Gut erfolgt, das gerade entlang der rotierenden Wand nach oben bewegt wird, und andererseits kann das Gut auch auf der schrägen Rückführfläche besonders schonend abfließen, ohne dann auf den Boden des Behälters mit hoher kinetischer Energie aufzutreffen. Die Rückführfläche trägt somit ebenfalls zu einer schonenden Bewegung des partikelförmigen Guts in dem Behälter bei.

Dabei ist es bevorzugt, wenn die Rückführfläche um die vertikale Drehachse in gleicher Richtung wie die Wand und mit einer Drehgeschwindigkeit in Rotation antreibbar ist, die gleich der oder kleiner als die Drehgeschwindigkeit des zumindest einen Behälterelements ist, insbesondere wenn Letzteres das Umlenkelement selbst ist.

Wenn das Umlenkelement in Rotation versetzt ist, erhält das partikelförmige Gut durch die Drehbewegung des Umlenkelements eine zentrifugal tangentiale Bewegungskomponente, die dann durch die gleichsinnige Drehung der Rückführfläche aufgenommen wird, so dass das partikelförmige Gut mit einer geringen Relativgeschwindigkeit zur Rückführfläche auf diese gelangt, wodurch Abrasionen des partikelförmigen Guts auch im Bereich des Übergangs vom Umlenkelement auf die Rückführfläche vermindert werden. Wie bereits zuvor im Zusammenhang mit dem Wandsegment des Behälters beschrieben, kann auch die Rückführfläche ein oder mehrere Wandsegmente aufweisen, die dem Umlenkelement benachbart sind, und die sich dann mit von oben nach unten abnehmender Drehgeschwindigkeit drehen, wobei der untere Teil der Rückführfläche dann beispielsweise statisch sein kann.

In einer weiteren bevorzugten Ausgestaltung der Vorrichtung ist für das zumindest eine Behälterelement ein Antrieb vorgesehen, der das Behälterelement unabhängig von der Wand antreibt.

Hierbei ist von Vorteil, dass die Drehgeschwindigkeit des zumindest einen Behälterelements mittels einer entsprechenden Steuereinrichtung unabhängig von der Drehgeschwindigkeit der Wand des Behälters eingestellt werden kann, was insbesondere auch eine Anpassung der Drehgeschwindigkeit des zumindest einen Behälterelements in Abhängigkeit der Beschaffenheit des zu behandelnden Guts ermöglicht.

Es kann aber auch vorgesehen sein, dass für das zumindest eine Behälterelement ein Antrieb vorgesehen ist, der die Drehbewegung der Wand in eine langsamere Drehbewegung des zumindest einen Behälterelements umsetzt.

Eine solche Umsetzung kann beispielsweise über ein Getriebe erfolgen, wobei zur Einstellung verschiedener Relativgeschwindigkeiten zwischen dem zumindest einen Behälterelement und der Wand des Behälters Mehrstufengetriebe von Vorteil sind, um verschiedene Drehgeschwindigkeiten des zumindest einen Behälterelements einstellen zu können.

Weitere Vorteile und Merkmale ergeben sich aus der nachfolgenden Beschreibung und der beigefügten Zeichnung.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird mit Bezug auf diese hiernach näher beschrieben. Es zeigen:
- Fig. 1: ausschnittsweise eine Vorrichtung zum Behandeln eines partikelförmigen Guts in einer ersten Betriebsstellung im Querschnitt;
- Fig. 2: die Vorrichtung in Fig. 1 in einer zweiten Betriebsstellung;
- Fig. 3: eine im Maßstab vergrößerte Teildarstellung der Vorrichtung in Fig. 1.

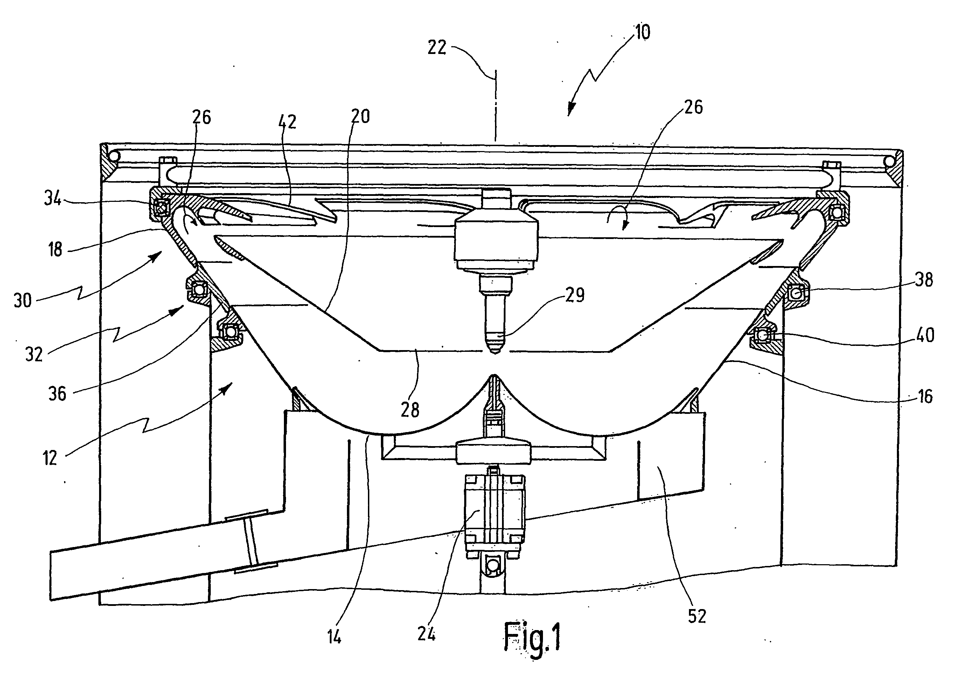

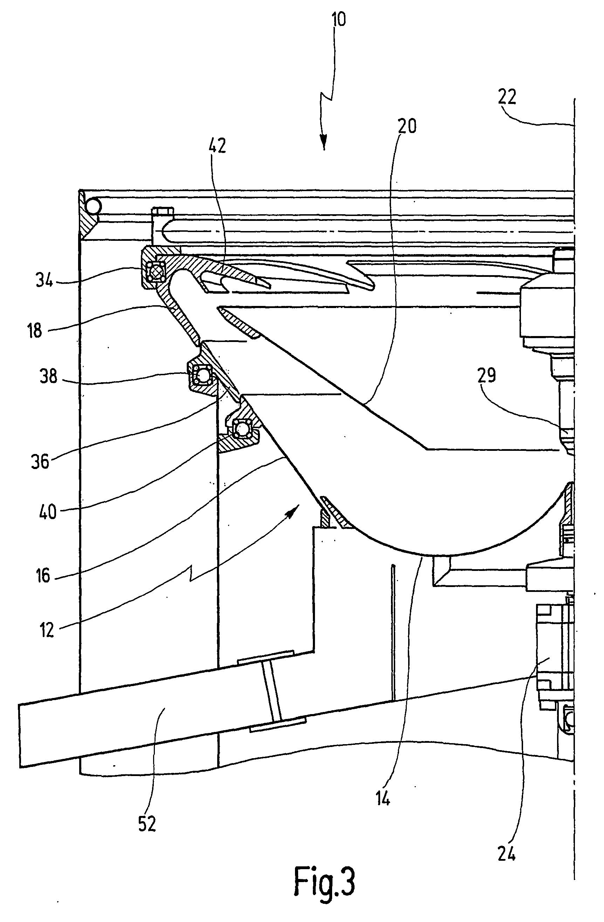

In Fig. 1 bis 3 ist ausschnittsweise eine mit dem allgemeinen Bezugszeichen 10 versehene Vorrichtung zum Behandeln eines partikelförmigen Guts dargestellt. Mit der Vorrichtung 10 kann partikelförmiges Gut beispielsweise mit einem Überzugsmedium behandelt werden, und die Vorrichtung 10 kann insbesondere zum Filmbeschichten einschließlich Trocknen von Arznei-, Lebensmittel- oder technischen Formlingen verwendet werden. Bezüglich der Durchführung eines Verfahrens zum Behandeln des partikelförmigen Guts mit der Vorrichtung 10 wird auf die veröffentlichte internationale Patentanmeldung mit der Veröffentlichungsnummer WO 00/10699 verwiesen.

Die Vorrichtung 10 weist einen Behälter 12 auf, der einen Boden 14, eine hochstehende Wand 16, ein Umlenkelement 18 und eine innerhalb der Wand 16 Rückführfläche 20 aufweist.

Der doppelt geschwungene Boden 14 und die in Form eines Kegelmantels ausgebildete hochstehende Wand 16 sind um eine vertikale Drehachse 22 in Rotation antreibbar. Der Boden 14 ist dabei mit gleicher oder unterschiedlicher Drehgeschwindigkeit in Bezug auf die hochstehende Wand 16 drehbar.

Ein mehrwelliger Drehantrieb 24 dient dazu, den Boden 14 und die Wand 16 mit unterschiedlichen Drehgeschwindigkeiten, vorzugsweise in gleicher Drehrichtung in Rotation zu versetzen.

Beim Betrieb der Vorrichtung 10 wird das partikelförmige Gut in den Behälter 12 eingefüllt. Durch die Rotation des Bodens 14 und der Wand 16 des Behälters 12 wird das partikelförmige Gut auf Grund von Zentrifugalkräften entlang des Bodens 14 und dann entlang der Wand 16 in den oberen Bereich des Behälters 12 bewegt, dort gemäß einem Pfeil 26 in ihrer Bewegungsrichtung umgelenkt und tritt von dem Umlenkelement 18 dann auf die Rückführfläche 20 über, auf der es unter Wirkung der Schwerkraft nach unten gleitet und aus einer unteren Öffnung 28 der Rückführfläche 20, die insgesamt die Form eines Konus aufweist, auf den Boden 14 zurück fällt. Während des Zurückfallens von der Rückführfläche 20 auf den Boden 14 wird das partikelförmige Gut je nach der durchgeführten Behandlung mit einem Überzugsmedium besprüht, das von einer Düse 29 abgegeben wird.

Insoweit entspricht die Vorrichtung 10 der aus der WO 00/10699 bekannten Vorrichtung.

Im Unterschied zu der bekannten Vorrichtung ist im oberen Bereich des Behälters 12 der Vorrichtung 10 zumindest ein Behälterelement, und im vorliegenden Ausführungsbeispiel sind zwei Behälterelemente 30 und 32 im oberen Bereich des Behälters 12 vorhanden, um die Bahngeschwindigkeit der Gutpartikel abzusenken bzw. um eine bestimmte Relativgeschwindigkeit der Gutpartikel zu dem Umlenkelement 18 zu erhalten, indem die Behälterelemente 30 und 32 in gleicher Drehrichtung wie die hochstehende Wand 16, jedoch mit geringerer Drehgeschwindigkeit um die vertikale Drehachse 22 in Rotation antreibbar sind.

Das erste Behälterelement 30 ist das Umlenkelement 18 selbst. Entsprechend ist das Umlenkelement 18 um die vertikale Drehachse 22 in Rotation antreibbar, und zwar in gleiche Richtung wie die Wand 16, jedoch mit geringerer Drehgeschwindigkeit. Das Umlenkelement 18 ist entsprechend mittels eines Drehlagers 34, beispielsweise Dünnringlagers, gelagert.

Das zweite Behälterelement 32 ist ein Wandsegment 36, das dem Umlenkelement 18 benachbart ist. Das Wandsegment 36 ist wie die Wand 16 kegelstumpfmantelförmig ausgebildet und mittels eines Drehlagers 38 um die vertikale Drehachse 22 drehbar gelagert. Die Wand 16 ist ihrerseits über ein weiteres Drehlager 40 um die vertikale Drehachse 22 drehbar gelagert. Die Drehlager 38 und 40 sind beispielsweise als Dünnringlager ausgebildet.

Die Drehgeschwindigkeit des Wandsegments 36 ist auf einen Wert einstellbar, der kleiner ist als die Drehgeschwindigkeit der Wand 16, und die Drehgeschwindigkeit des Umlenkelements 18 ist auf einen Wert einstellbar, der kleiner ist als die Drehgeschwindigkeit des Wandsegments 36. Auf diese Weise wird die Umfangs- bzw. Bahngeschwindigkeit des partikelförmigen Guts, das von der rotierenden Wand 16 auf das Wandsegment und anschließend auf das Umlenkelement 18 übertritt, nach und nach verringert, wodurch sich eine bestimmte Relativgeschwindigkeit zwischen den Gutpartikeln und dem Umlenkelement 18 ergibt, die Abrasionen vermeidet oder zumindest reduziert, und dennoch eine fortlaufende sichere Umlenkung und Überführung der Gutpartikel von dem Umlenkelement 18 auf die Rückführfläche 20 gewährleistet, ohne dass ein Partikelstau am Umlenkelement 18 auftritt.

Für das Wandsegment 36 und das Umlenkelement 18 sind entsprechende Antriebe vorgesehen, die eine unabhängige Einstellung ihrer Drehgeschwindigkeit untereinander und unabhängig von der Drehgeschwindigkeit der Wand 16 ermöglicht. Beispielsweise kann der für den Boden 14 und die Wand 16 vorgesehene Antrieb 24 weitere Antriebswellen aufweisen, deren Drehung dann auf die Behälterelemente 30 und 32 übertragen wird.

Die Drehgeschwindigkeit der Behälterelemente 30 und 32 ist auf einen Wert einstellbar, der im Bereich von etwa 10 % bis 80 % der Drehgeschwindigkeit der Wand 16 liegt, wobei dies insbesondere für die Drehgeschwindigkeit des Umlenkelements 18 gilt. Bei einem Wert einer Drehgeschwindigkeit des Umlenkelements 18 von 20 bis 50 % der Drehgeschwindigkeit der Wand 16 lassen sich gute Ergebnisse erzielen.

Die Drehgeschwindigkeit des Umlenkelements 18 ist auf einen solchen Wert einstellbar, dass die Bahngeschwindigkeitsdifferenz zwischen benachbarten Bereichen des Umlenkelements 18 und des Wandsegments 36 im Bereich von etwa 0,5 bis 3 m/s, insbesondere von etwa 0,9 bis 2 m/s liegt.

Bei besonders großvolumigen Behältern 12 zur Behandlung großer Chargen eines partikelförmigen Guts bewirkt das mit geringerer Drehgeschwindigkeit drehbare Wandsegment 36 des Behälters 12 eine Absenkung der Bahngeschwindigkeit der Gutpartikel auf einen Zwischenbereich, so dass der Übergang von der Drehgeschwindigkeit der Wand 16 auf die Drehgeschwindigkeit des Umlenkelements 18 abgemildert wird. Es können auch mehrere axial unmittelbar aufeinanderfolgende Wandsegmente dieser Art vorgesehen sein, die eine mehrstufige Absenkung der Geschwindigkeit der Gutpartikel bewirken.

Das Umlenkelement 18 ist mit einer Anzahl von Leitschaufeln 42 versehen, die mit in Bezug auf die Drehrichtung rückwärtigen Krümmungen ausgebildet sein können, wobei die Leitschaufeln 42 nur geringfügig in den oberen Durchmesser der Rückführfläche 20 hineinragen, während sich das obere Ende der Rückführfläche 20 bis nahe an den Durchmesser des Umlenkelements 18 erstreckt.

Die Vorrichtung 10 wird nun so betrieben, dass bei rotierender Wand 16 das Wandsegment 36 mit einer Drehgeschwindigkeit in Rotation versetzt wird, die kleiner ist als die Drehgeschwindigkeit der Wand 16. Das Umlenkelement 18 wird ebenfalls in gleicher Richtung wie das Wandsegment 36 und die Wand 16 in Rotation versetzt, jedoch mit einer noch geringeren Drehgeschwindigkeit als das Wandsegment 36, so dass die Drehgeschwindigkeiten von der Wand 16 über das Wandsegment 36 bis zu dem Umlenkelement 18 abgestuft sind.

Es versteht sich, dass in anderen Ausgestaltungen der Vorrichtung 10 das Wandsegment 36 weggelassen oder fest mit der Wand 16 des Behälters 12 verbunden sein kann, wobei dann nur das Umlenkelement 18 mit geringerer Drehgeschwindigkeit relativ zur Wand 16 in Rotation versetzbar ist, oder das Umlenkelement 18 ist statisch, d.h. nicht in Rotation versetzbar ist, wobei dann ein oder mehrere Wandsegmente in der Art des Wandsegments 36 vorhanden sind, die eine Absenkung der Bahngeschwindigkeit der Gutpartikel bewirken, so dass die Relativgeschwindigkeit zwischen den Gutpartikeln und dem dann statischen Umlenkelement 18 in einem Bereich liegt, in dem eine Abrasion vermieden bzw. reduziert und eine kinematisch günstige Umlenkung der Gutpartikel von der Wand 16 über das Umlenkelement 18 auf die Rückführfläche 20 gewährleistet ist.

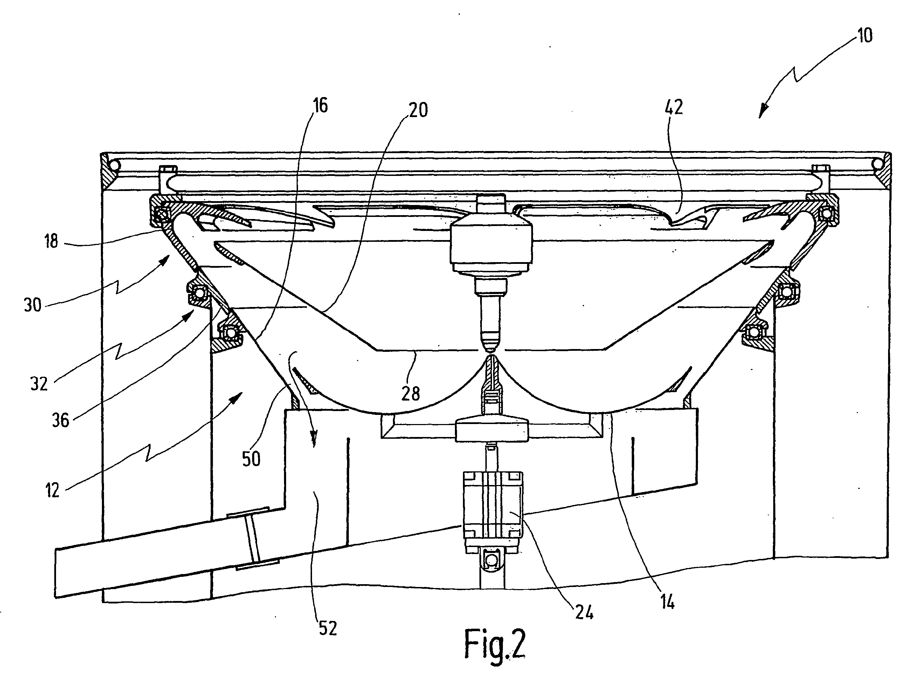

In Fig. 1 ist die Vorrichtung 10 in einer Betriebsstellung dargestellt, in der in dem Behälter 12 das partikelförmige Gut in fortlaufender Umwälzung behandelt wird. In Fig. 2 ist die Vorrichtung 10 in einer Betriebsstellung dargestellt, in der das partikelförmige Gut nach Beendigung der Behandlung aus dem Behälter 12 entleert wird. Dazu ist der Boden 14 gegenüber der Wand 16 angehoben, so dass das partikelförmige Gut durch einen Spalt 50 zwischen dem Boden 14 und der Wand 16 aus dem Behälter 12 in eine Entleerungsrinne 52 und über diese aus der Vorrichtung 10 abfließen kann. Ein Teil des Gutes, das noch auf dem Boden 14 liegt, kann durch Rotation des Bodens bei stehender Wand 16 von dem Boden 14 entfernt werden und gelangt dann ebenfalls in den Spalt 50 und in die Entleerungsrinne 52 zur vollständigen Abführung des Guts aus dem Behälter 12.

## Patentansprüche

1. Vorrichtung zum Behandeln eines partikelförmigen Guts, mit einem Behälter (12), der einen Boden (14), eine hochstehende, sich von unten nach oben erweiternde Wand (16) und in einem oberen Bereich ein Umlenkelement (18) aufweist, um das entlang der Wand (16) nach oben bewegte Gut in seiner Bewegungsrichtung so umzulenken, dass es wieder zu dem Boden (14) zurückkehren kann, wobei zumindest die Wand (16) um eine vertikale Drehachse (22) in Rotation antreibbar ist, **dadurch gekennzeichnet, dass** im oberen Bereich des Behälters (12) zumindest ein Behälterelement (30, 32) vorhanden ist, das in gleicher Richtung wie die hochstehende Wand (16), jedoch mit geringerer Drehgeschwindigkeit um die vertikale Drehachse (22) in Rotation antreibbar ist.

2. Vorrichtung nach Anspruch 1, **dadurch gekennzeichnet, dass** das zumindest eine Behälterelement (30) das Umlenkelement (18) selbst ist.

3. Vorrichtung nach Anspruch 1 oder 2, **dadurch gekennzeichnet, dass** das zumindest eine Behälterelement (32) zumindest ein Wandsegment (36) ist, das dem Umlenkelement (18) benachbart ist.

4. Vorrichtung nach Anspruch 2 und 3, **dadurch gekennzeichnet, dass** sowohl das Umlenkelement (18) als auch das zumindest eine Wandsegment (36) um die vertikale Drehachse (22) in Rotation antreibbar sind, wobei die Drehgeschwindigkeit des Wandsegments (36) auf einen Wert einstellbar ist, der kleiner ist als die Drehgeschwindigkeit der Wand (16), und wobei die Drehgeschwindigkeit des Umlenkelements (18) auf einen Wert einstellbar ist, der kleiner ist als die Drehgeschwindigkeit des Wandsegments (36).

5. Vorrichtung nach einem der Ansprüche 1 bis 4, **dadurch gekennzeichnet, dass** die Drehgeschwindigkeit des zumindest einen Behälterelements (30, 32) auf einen Wert einstellbar ist, der im Bereich von etwa 10 % bis 80 % der Drehgeschwindigkeit der Wand (16) liegt.

6. Vorrichtung nach einem der Ansprüche 1 bis 5, **dadurch gekennzeichnet, dass** die Drehgeschwindigkeit des zumindest einen Behälterelements (30, 32) auf einen Wert einstellbar ist, der im Bereich von etwa 20 % bis 60 % der Drehgeschwindigkeit der Wand (16) liegt.

7. Vorrichtung nach einem der Ansprüche 1 bis 6, **dadurch gekennzeichnet, dass** die Drehgeschwindigkeit des zumindest einen Behälterelements (30, 32) auf einen solchen Wert einstellbar ist, dass die Bahngeschwindigkeitsdifferenz zwischen benachbarten Bereichen der Wand (16) und des Behälterelements (30, 32) im Bereich von etwa 0,5 bis 3 m/s liegt.

8. Vorrichtung nach einem der Ansprüche 1 bis 7, **dadurch gekennzeichnet, dass** die Drehgeschwindigkeit des zumindest einen Behälterelements (30, 32) auf einen solchen Wert einstellbar ist, dass die Bahngeschwindigkeitsdifferenz zwischen benachbarten Bereichen der Wand (16) und des Behälterelements (30, 32) im Bereich von etwa 0,9 bis 2 m/s liegt.

9. Vorrichtung nach einem der Ansprüche 1 bis 8, **dadurch gekennzeichnet, dass** innerhalb oder außerhalb der Wand (16) des Behälters (12) eine sich von oben nach unten verjüngende Rückführfläche (20) zum Zurückführen des Guts zum Boden (14) des Behälters (12) angeordnet ist.

10. Vorrichtung nach Anspruch 9, **dadurch gekennzeichnet, dass** die Rückführfläche (20) um die vertikale Drehachse (22) in gleicher Richtung wie die Wand (16) und mit einer Drehgeschwindigkeit in Rotation antreibbar ist, die gleich der oder kleiner als die Drehgeschwindigkeit des zumindest einen Behälterelements (30, 32) ist, insbesondere wenn letzteres das Umlenkelement (18) selbst ist.

11. Vorrichtung nach einem der Ansprüche 1 bis 10, **dadurch gekennzeichnet, dass** für das zumindest eine Behälterelement (30, 32) ein Antrieb vorgesehen ist, der das Behälterelement unabhängig von der Wand (16) antreibt.

12. Vorrichtung nach einem der Ansprüche 1 bis 11, **dadurch gekennzeichnet, dass** für das zumindest eine Behälterelement (30, 32) ein Antrieb vorgesehen ist, der die Drehbewegung der Wand (16) in eine langsamere Drehbewegung des zumindest einen Behälterelements (30, 32) umsetzt.

13. Verfahren zum Betreiben einer Vorrichtung nach einem der Ansprüche 1 bis 12, **dadurch gekennzeichnet, dass** das zumindest eine Behälterelement (30, 32) mit einer Drehgeschwindigkeit in Rotation versetzt wird, die kleiner ist als die Drehgeschwindigkeit der Wand (16).

14. Verfahren nach Anspruch 13, **dadurch gekennzeichnet, dass** sowohl das Umlenkelement (18) als auch zumindest ein Wandsegment (36) um die vertikale Drehachse (22) in Rotation antreibbar sind, und dass die Drehgeschwindigkeit des Wandsegments (36) auf einen Wert eingestellt wird, der kleiner ist als die Drehgeschwindigkeit der Wand (16), und dass die Drehgeschwindigkeit des Umlenkelements (18) auf einen Wert eingestellt wird, der kleiner ist als die Drehgeschwindigkeit des Wandsegments (36).

15. Verfahren nach Anspruch 13 oder 14, **dadurch gekennzeichnet, dass** das zumindest eine Behälterelement (30, 32) mit einer Drehgeschwindigkeit in Rotation versetzt wird, die im Bereich von etwa 10 % bis 80 % der Drehgeschwindigkeit der Wand (16) liegt.

16. Verfahren nach einem der Ansprüche 13 bis 15, **dadurch gekennzeichnet, dass** das zumindest eine Behälterelement (30, 32) mit einer Drehgeschwindigkeit in Rotation versetzt wird, die im Bereich von etwa 20 % bis 60 % der Drehgeschwindigkeit der Wand (16) liegt.

17. Verfahren nach einem der Ansprüche 13 bis 16, **dadurch gekennzeichnet, dass** die Drehgeschwindigkeit des zumindest einen Behälterelements (30, 32) auf einen solchen Wert eingestellt wird, dass die Bahngeschwindigkeitsdifferenz zwischen benachbarten Bereichen der Wand (16) und des Behälterelements (30, 32) im Bereich von etwa 0,5 bis 3 m/s liegt.

18. Verfahren nach einem der Ansprüche 13 bis 17, **dadurch gekennzeichnet, dass** die Drehgeschwindigkeit des zumindest einen Behälterelements (30, 32) auf einen solchen Wert eingestellt wird, dass die Bahngeschwindigkeitsdifferenz zwischen benachbarten Bereichen der Wand (16) und des Behälterelements (30, 32) im Bereich von etwa 0,9 bis 2 m/s liegt.

## Claims

1. An apparatus for treating a particulate material, comprising a container (12), which has a base (14), an upright wall (16), extending from bottom to top, and, in an upper region, a deflecting element (18), to deflect the material moved up along the wall (16) in its direction of movement in such a way that it can return again to the base (14), it being possible for at least the wall (16) to be driven in rotation about a vertical axis of rotation (22), **characterized in that** in the upper region of the container (12) there is at least one container element (30, 32) which can be driven in rotation in the same direction as the upright wall (16), but with lower rotational speed, about the vertical axis of rotation (22).

2. The apparatus of claim 1, **characterized in that** the at least one container element (30) is the deflecting element (18) itself.

3. The apparatus of claim 1 or 2, **characterized in that** the at least one container element (32) is at least one wall segment (36) which is adjacent the deflecting element (18).

4. The apparatus of claims 2 and 3, **characterized in that** both the deflecting element (18) and the at least one wall segment (36) can be driven in rotation about the vertical axis of rotation (22), it being possible for the rotational speed of the wall segment (36) to be set to a value which is less than the rotational speed of the wall (16), and it being possible for the rotational speed of the deflecting element (18) to be set to a value which is less than the rotational speed of the wall segment (36).

5. The apparatus of anyone of claims 1 through 4, **characterized in that** the rotational speed of the at least one container element (30, 32) can be set to a value which lies in the range from approximately 10% to 80% of the rotational speed of the wall (16).

6. The apparatus of anyone of claims 1 through 5, **characterized in that** the rotational speed of the at least one container element (30, 32) can be set to a value which lies in the range from approximately 20% to 60% of the rotational speed of the wall (16).

7. The apparatus of anyone of claims 1 through 6, **characterized in that** the rotational speed of the at least one container element (30, 32) can be set to such a value that the difference in the path speed between adjacent regions of the wall (16) and of the container element (30, 32) lies in the range from approximately 0.5 to 3 m/s.

8. The apparatus of anyone of claims 1 through 7, **characterized in that** the rotational speed of the at least one container element (30, 32) can be set to such a value that the difference in the path speed between adjacent regions of the wall (16) and of the container element (30, 32) lies in the range from approximately 0.9 to 2 m/s.

9. The apparatus of anyone of claims 1 through 8, **characterized in that** a returning surface (20) that becomes narrower from top to bottom and is intended for returning the material to the base (14) of the container (12) is arranged inside or outside the wall (16) of the container (12).

10. The apparatus of claim 9, **characterized in that** the returning surface (20) can be driven in rotation about the vertical axis of rotation (22) in the same direction as the wall (16) and with a rotational speed which is equal to or less than the rotational speed of the at least one container element (30, 32), in particular if the latter is the deflecting element (18) itself.

11. The apparatus of anyone of claims 1 through 10, **characterized in that** a drive which drives the container element independently of the wall (16) is provided for the at least one container element (30, 32).

12. The apparatus of anyone of claims 1 through 11, **characterized in that** a drive which converts the rotational movement of the wall (16) into a slower rotational movement of the at least one container element (30, 32) is provided for the at least one container element (30, 32).

13. A method for operating an apparatus according to anyone of claims 1 through 12, **characterized in that** the at least one container element (30, 32) is set in rotation with a rotational speed which is less than the rotational speed of the wall (16).

14. The method of claim 13, **characterized in that** both the deflecting element (18) and at least one wall segment (36) can be driven in rotation about the vertical axis of rotation (22), and that the rotational speed of the wall segment (36) is set to a value which is less than the rotational speed of the wall (16), and that the rotational speed of the deflecting element (18) is set to a value which is less than the rotational speed of the wall segment (36).

15. The method of claim 13 or 14, **characterized in that** the at least one container element (30, 32) is set in rotation with a rotational speed which lies in the range from approximately 10% to 80% of the rotational speed of the wall (16).

16. The method of anyone of claims 13 through 15, **characterized in that** the at least one container element (30, 32) is set in rotation with a rotational speed which lies in the range from approximately 20% to 60% of the rotational speed of the wall (16).

17. The method of anyone of claims 13 through 16, **characterized in that** the rotational speed of the at least one container element (30, 32) is set to such a value that the difference in the path speed between adjacent regions of the wall (16) and of the container element (30, 32) lies in the range from approximately 0.5 to 3 m/s.

18. The method of anyone of claims 13 through 17, **characterized in that** the rotational speed of the at least one container element (30, 32) is set to such a value that the difference in the path speed between adjacent regions of the wall (16) and of the container element (30, 32) lies in the range from approximately 0.9 to 2 m/s.

## Revendications

1. Dispositif pour traiter un produit particulaire, comprenant un récipient (12), qui présente un fond (14), une paroi (16) surélevée s'étendant du bas vers le haut et dans une zone supérieure un élément de déviation (18), afin de dévier le produit déplacé le long de la paroi (16) vers le haut dans sa direction de déplacement de sorte qu'il puisse revenir à nouveau vers le fond (14), au moins la paroi (16) pouvant être entraînée en rotation autour d'un axe de rotation (22) vertical, **caractérisé en ce que** dans la zone supérieure du récipient (12) est présent au moins un élément de récipient (30, 32), qui peut être entraîné en rotation dans le même sens que la paroi (16) surélevée, mais avec une vitesse de rotation plus faible autour de l'axe de rotation (22) vertical.

2. Dispositif selon la revendication 1, **caractérisé en ce que** le au moins un élément de récipient (30) est l'élément de déviation (18) lui -même.

3. Dispositif selon la revendication 1 ou 2, **caractérisé en ce que** le au moins un élément de récipient (32) est au moins un segment de paroi (36) qui est voisin de l'élément de déviation (18).

4. Dispositif selon les revendications 2 et 3, **caractérisé en ce qu'**aussi bien l'élément de déviation (18) que le au moins un segment de paroi (36) peuvent être entraînés en rotation autour de l'axe de rotation (22) vertical, la vitesse de rotation du segment de paroi (36) pouvant être réglée sur une valeur qui est inférieure à la vitesse de rotation de la paroi (16), et la vitesse de rotation de l'élément de déviation (18) pouvant être réglée sur une valeur qui est inférieure à la vitesse de rotation du segment de paroi (36).

5. Dispositif selon l'une des revendications 1 à 4, **caractérisé en ce que** la vitesse de rotation du au moins un élément de récipient (30, 32) peut être réglée sur une valeur qui est située dans la plage d'environ 10 à 80 % de la vitesse de rotation de la paroi (16).

6. Dispositif selon l'une des revendications 1 à 5, **caractérisé en ce que** la vitesse de rotation du au moins un élément de récipient (30, 32) peut être réglée sur une valeur qui se situe dans la plage de 20 a 60 % de la vitesse de rotation de la paroi (16).

7. Dispositif selon l'une des revendications 1 à 6, **caractérisé en ce que** la vitesse de rotation du au moins un élément de récipient (30, 32) peut être réglée sur une valeur telle que la différence de vitesse de trajectoire entre des zones voisines de la paroi (16) et de "élément de récipient (30, 32) se situe dans la plage d'environ 0,5 à 3 m/s.

8. Dispositif selon l'une des revendications 1 à 7 **caractérisé en ce que** la vitesse de rotation du au moins un élément de récipient (30, 32) peut être réglée sur une valeur telle que la différence de vitesse de trajectoire entre des zones voisines de la paroi (16) de l'élément de récipient (30, 32) se situe dans la plage d'environ 0,9 à 2 m/s.

9. Dispositif selon l'une des revendications 1 à 8. **caractérisé en ce qu'**à l'intérieur ou à l'extérieur de la paroi (16) du récipient (12) est disposée une surface de retour (20) se rétrécissant du haut vers le bas pour le retour du produit vers le fond (14) du récipient (12).

10. Dispositif selon la revendication 9, **caractérisé en ce que** la surface de retour (20) peut être entraînée en rotation autour de l'axe de rotation (22) vertical dans le même sens que la paroi (16) et avec une vitesse de rotation qui est égale ou inférieure à la vitesse de rotation du au moins un élément de récipient (30, 32), en particulier lorsque celui-ci est l'élément de déviation (18) lui-même.

11. Dispositif selon l'une des revendications 1 à 1C, **caractérisé en ce qu'**un entraînement, qui entraîne l'élément de récipient indépendamment de la paroi (16), est prévu pour le au moins un élément de récipient (30, 32).

12. Dispositif selon l'une des revendications 1 à 11, **caractérisé en ce qu'**il est prévu pour le au moins un élément de récipient (30, 32) un entraînement qui convertit le mouvement de rotation de 13 paroi (16) en un mouvement de rotation plus lent du au moins un élément de récipient (30, 32).

13. Procédé pour l'exploitation d'un dispositif selon l'une des revendications 1 à 12, **caractérisé en ce que** le au moins un élément de récipient (30, 32) est mis en rotation avec une vitesse de rotation qui est inférieure à la vitesse de rotation de la paroi (16).

14. Procédé selon la revendication 13, **caractérisé en ce qu'**aussi bien l'élément de déviation (18) qu'au moins un segment de paroi (36) sont entraînés en rotation autour de l'axe de rotation (22) vertical, et **en ce que** la vitesse de rotation du segment de paroi (36) est réglée sur une valeur qui est inférieure à la vitesse de rotation de la paroi (16), et **en ce que** la vitesse de rotation de l'élément de déviation (18) est réglée sur une valeur qui est inférieure à la vitesse de rotation du segment de paroi (36).

15. Procédé selon la revendication 13 ou 14, **caractérisé en ce que** le au moins un élément de récipient (30, 32) est mis en rotation avec une vitesse de rotation qui se situe dans la plage d'environ 10 à 80 % de la vitesse de rotation de la paroi (16).

16. Procédé selon l'une des revendications 13 à 15, **caractérisé en ce que** le au moins un élément de récipient (30, 32) est mis en rotation avec une vitesse de rotation qui se situe dans la plage d'environ 20 à 60 % de la vitesse de rotation de la paroi (16).

17. Procédé selon l'une des revendications 13 à 16. **caractérisé en ce que** la vitesse de rotation du au moins un élément de récipient (30, 32) est réglée sur une valeur telle que la différence de vitesse de trajectoire entre des zones voisines de la paroi (16) et de l'élément de récipient (30, 32) se situe dans la plage d'environ 0,5 à 3 m/s.

18. Procédé selon l'une des revendications 13 à 17, **caractérisé en ce que** la vitesse de rotation du au moins un élément de récipient (30, 32) est réglée sur une valeur telle que la différence de vitesse de trajectoire entre des zones voisines de la paroi (16) et de l'élément de récipient (30, 32) se situe dans la plage d'environ 0,9 à 2 m/s.
